# EUROPÄISCHE PATENTSCHRIFT

(11) **EP 0 947 117 B1**
(45) Veröffentlichungstag und Bekanntmachung des Hinweises auf die Patenterteilung: **22.09.2004**
(21) Anmeldenummer: 97954693.4
(22) Anmeldetag: 15.12.1997
(51) Int. Cl.: H04Q 7/32

(54) **VERFAHREN UND VORRICHTUNG ZUR REDUKTION DES STROMVERBRAUCHS IN MOBILEN MULTIMODE-KOMMUNIKATIONSENDGERÄTEN**
METHOD AND DEVICE FOR REDUCING ELECTRICITY CONSUMPTION IN MOBILE MULTIMODE TELECOMMUNICATION TERMINALS
PROCEDE ET DISPOSITIF DE REDUCTION DE LA CONSOMMATION ELECTRIQUE DANS DES TERMINAUX DE TELECOMMUNICATION MULTIMODE MOBILES

(30) Priorität: 19.12.1996 DE 19653106
(43) Veröffentlichungstag der Anmeldung: 06.10.1999
(73) Patentinhaber: Infineon Technologies AG, 81669 München (DE)
(72) Erfinder: LILLIE, Frank, D-80337 München (DE); BOETZEL, Ulrich, D-41564 Kaarst (DE); GUNZELMANN, Bertram, D-86163 Augsburg (DE)
(74) Vertreter: Lange, Thomas, Dr.
(86) Internationale Anmeldenummer: PCT/DE1997/002918
(87) Internationale Veröffentlichungsnummer: WO 1998/027766

(56) Entgegenhaltungen:
- GB-A- 2 289 191
- US-A- 5 301 359
- US-A- 5 517 677
- M. MOULY ET AL.: "THE GSM SYSTEM FOR MOBILE COMMUNICATIONS" 1993 , MOULY M AND PAUTET M-B , 91120 PALAISEAU, FRANCE XP002038439 200240 PAGES 442 - 458 siehe Seite 448, Absatz 2

## Beschreibung

Die Erfindung bezieht sich auf ein Verfahren und eine Vorrichtung zur Reduktion des Stromverbrauchs in mobilen Multimode-Kommunikationsendgeräten. Multimode bedeutet hierbei, daß das Gerät in verschiedenen Betriebsarten betrieben werden kann und dadurch über verschiedene Kommunikationsnetze kommunizieren kann. Dualmode wäre der entsprechende spezielle Begriff, wenn das Gerät über zwei verschiedene Kommunikationsnetze kommunizieren kann.

Durch die zukünftige weltweite Integration und Kooperation verschiedener Kommunikationsnetze zur drahtlosen Übertragung von Sprache oder Daten entsteht der Wunsch der Nutzer, alle oder zumindest mehrere dieser Kommunikationsnetze mit einem Gerät benützen zu können. Um mit diesem einen Gerät in all diesen Kommunikationsnetzen empfangsbereit und damit erreichbar zu sein, muß das Kommunikationsendgerät ständig nach mehreren evtl. vorhandenen Netzen suchen (scannen). Dies führt zu einer, verglichen mit einfachen mobilen Endgeräten erhöhten Scanhäufigkeit. Zum Scannen müssen mehrere Hardware-Komponenten eines Multimode-Kommunikationsendgerätes, wie z.B. die HF-Baugruppen Verstärker, Mischer, Demodulator, Oszillator und die Basisbandbaugruppen Digitaler Signalprozessor, Prozessor und Speicher aktiv sein und mit Strom versorgt werden. Um dies zu ermöglichen, müssen mehrere dieser Hardware-Komponenten entsprechend den Anforderungen unterschiedlicher Kommunikationsnetze in unterschiedlicher und somit mehrfacher Ausführung vorhanden sein und mit Strom versorgt werden. Diese Gründe führen zu einem erhöhten Stromverbrauch gegenüber Kommunikationsendgeräten, die nur innerhalb eines bestimmten Kommunikationsnetzes erreichbar sind. Daraus resultiert eine geringere Betriebsbereitschaftszeit (stand by time), in der das Gerät ohne zwischenzeitliches Nachladen erreichbar ist. Diese Betriebsbereitschaftszeit ist ein entscheidender technischer Parameter und ein wichtiges Verkaufskriterium von mobilen Kommunikationsendgeräten.

In der Patentschrift US 5,517,677 wird ein Suchverfahren beschrieben, bei welchem die "home"-Kanäle verschiedener Funksysteme und -stationen überwacht werden. Die lokale Suchabfolge in den verschiedenen Funknetzen wird dabei entsprechend der erwarteten Wahrscheinlichkeit eines über das jeweilige Funknetz eingehenden Telefonanrufes verändert. Damit wird eine erhöhte Erreichbarkeit der Mobilstation in solchen Funknetzen gewährleistet, über welche eingehende Telefonanrufe mit höherer Wahrscheinlichkeit erwartet werden.

In der Patentanmeldung GB 2 289 191 A wird ein Verfahren zur Übergabe ("handover") eines Anrufes zwischen verschiedenen Funknetzen beschrieben. Die Mobilstation erhält dabei Informationen über potentielle Übergabe-Kandidaten aus einem Informations-Speicher ("bulletin board") eines Funknetzes oder aus historischen Daten, die zuvor von der Mobilstation gesammelt wurden. Nach Erhalt dieser Informationen wird die tatsächliche Verfügbarkeit der Übergabe-Kandidaten geprüft.

Die Patentschrift US 5,301,359 beschreibt ein Verfahren zur Nutzung verschiedener, parallel verfügbarer Funknetze. Die Registrierung der Mobilstationen in den verschiedenen verfügbaren Funknetzen wird dabei von einer übergeordneten Einheit ("bulletin board controller") gesteuert, die über ein eigenes hochverfügbares Funknetz mit der Mobilstation kommuniziert.

Der Erfindung liegt die Aufgabe zugrunde, ein Verfahren und eine Vorrichtung anzugeben, mit denen der Stromverbrauch von mobilen Multimode-Kommunikationsendgeräten reduziert werden kann.

Diese Aufgabe wird durch ein Verfahren mit Merkmalen nach Anspruch 1 gelöst. Dabei wird die Häufigkeit des Suchens (Scannen) nach verfügbaren Kommunikationsnetzen in Abhängigkeit von Informationen über die örtliche Verfügbarkeit, insbesondere über den Bedeckungsgrad, dieser Kommunikationsnetze variiert. Es ist auch denkbar, daß diese Informationen dem Multimode-Kommunikationsendgerät über entsprechende Tasten bzw. eine Menüsteuerung durch den Nutzer mitgeteilt werden.

Der Erfindung liegt demnach der Gedanke zugrunde, daß nicht in sämtlichen Bereichen alle vorstellbaren, unterschiedlichen Kommunikationsnetze verfügbar sind, und daher von den in mehrfacher Ausführung vorhandenen Hardware-Komponenten eines Multimode-Kommunikationsendgerätes nur die zu betreiben und mit Strom zu versorgen, die benötigt werden, um über die momentan verfügbaren Kommunikationsnetze erreichbar zu sein. Die Erreichbarkeit ergibt sich dabei aus der Häufigkeit, mit welcher ein gegebenes Funknetz durch das Multimode-Kommunikationsendgerät gesucht wird. Die Häufigkeit der Suchvorgänge wird dabei dem Bedeckungsgrad angepaßt.

Bei einer Ausführungsform der Erfindung werden die Informationen darüber, welche Kommunikationsnetze verfügbar oder nicht verfügbar sind, insbesondere über den Bedeckungsgrad, von den verfügbaren Kommunikationsnetzen signalisiert.

Eine andere bevorzugte Ausführungsform der vorliegenden Erfindung sieht vor, daß sich die Häufigkeit der Suchvorgänge in einem selbstlernenden Prozeß an die örtliche Verfügbarkeit, insbesondere an den Bedeckungsgrad, der Kommunikationsnetze anpaßt. Bei einer weiteren bevorzugten Ausführungsform der Erfindung sucht das Kommunikationsendgerät in zeitlichen Abständen nach verfügbaren Kommunikationsnetzen, wobei die Suche nach bestimmten Kommunikationsnetzen eingestellt wird, wenn sich das Kommunikationsendgerät in Bereichen befindet, in denen ein verfügbares Kommunikationsnetz signalisiert, daß die Suche nach diesen bestimmten Kommunikationsnetzen eingestellt werden soll.

Eine weitere bevorzugte Ausführungsvariante der Erfindung sieht vor, daß das Kommunikationsendgerät in zeitlichen Abständen nach verfügbaren Kommunikationsnetzen sucht, wobei Bereiche, in denen die Suche nach bestimmten Kommunikationsnetzen erfolglos ist, markiert werden, und diese Markierung dazu verwendet wird, eine weitere oder erneute Suche nach diesen bestimmten Kommunikationsnetzen in diesen Bereichen wenigstens bis zum Ablauf einer bestimmten Zeitspanne einzustellen oder einzuschränken.

Weitere vorteilhafte Ausgestaltungen und Weiterbildungen des Erfindungsgegenstandes sind in den Unteransprüchen 6 bis 11 angegeben.

Der Erfindung entsprechende Vorrichtungen sind in den Ansprüchen 12 bis 14 angegeben.

Zur Erläuterung von Ausführungsformen der Erfindung dienen die nachstehend aufgelisteten Figuren:
FIG 1 zeigt in schematischer Weise ein GSM Netz und ein DECT Netz.
FIG 2 zeigt Kommunikationsnetze die unterschiedliche Frequenzbereiche benützen.
FIG 3 zeigt in schematischer Weise ein pikozellulares Netz, ein terrestrisches zellulares Mobilfunknetz und ein Satellitenmobilfunknetz.
FIG 4 zeigt in schematischer Form eine vorteilhafte Ausführungsform der erfindungsgemäßen Vorrichtung.

Die Erfindung wird im folgenden anhand bevorzugter Ausführungsbeispiele und mit Hilfe der Figuren näher beschrieben.

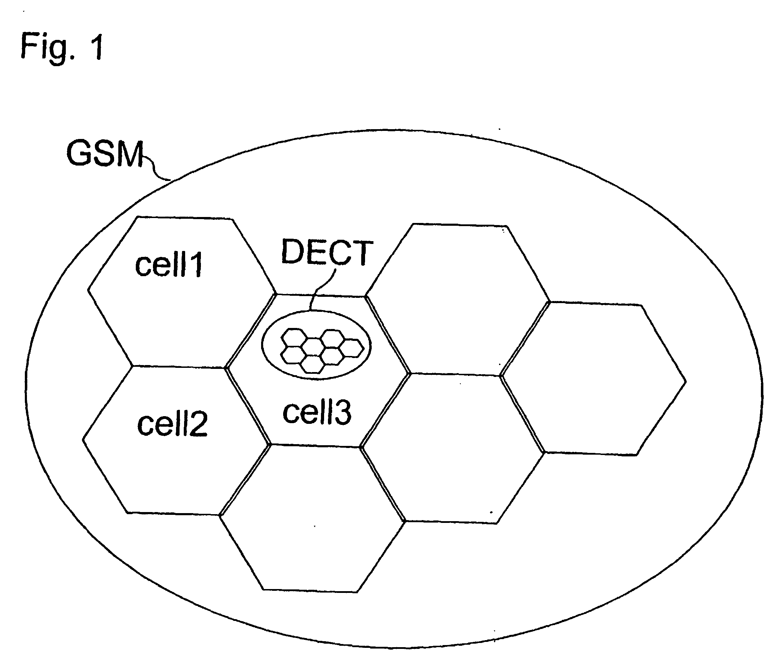

Figur 1 zeigt zwei unterschiedliche Kommunikationsnetze(GSM Netz , DECT Netz), von denen in einigen Bereichen (cell3) beide und in anderen Bereichen (celll, cell2) nur das GSM-Kommunikationsnetz verfügbar ist. Wenn nun ein mobiles Dualmode-Kommunikationsendgerät in beiden Kommunikationsnetzen erreichbar sein soll, ist ein ständiges Suchen (Scannen) nach evtl. verfügbaren Netzen nötig. Um dies zu ermöglichen müssen mehrere Hardware-Komponenten des Dualmode-Kommunikationsendgerätes entsprechend den Anforderungen der beiden unterschiedlichen Kommunikationsnetze in unterschiedlicher und somit zweifacher Ausführung vorhanden sein und in einem aktiven Zustand gehalten werden bzw. mit Strom versorgt werden. Um Strom zu sparen sieht das erfindungsgemäße Verfahren nun vor, daß das Dualmode-Kommunikationsendgerät Informationen über die jeweilige momentane Verfügbarkeit der beiden Kommunikationsnetze benützt, um die Häufigkeit der obengenannten Suchvorgänge zu variieren. Da der Stromverbrauch entscheidend von der Häufigkeit dieser Suchvorgänge abhängt, kann durch eine Reduzierung der Anzahl der Suchvorgänge auch der Stromverbrauch reduziert werden.

Eine Möglichkeit besteht darin, daß das GSM-Netz in jeder Zelle Informationen darüber signalisiert, wie gut diese Zelle mit DECT-Pikozellen bedeckt ist. Die Häufigkeit der Suchvorgänge wird dabei diesem Bedeckungsgrad angepaßt. Der Bedekkungsgrad kann dabei zwischen zwei Extremfällen schwanken: wenn in der gesamten GSM Zelle kein DECT System vorhanden ist, kann die Suche nach DECT Netzen ganz unterbleiben, wenn die gesamte GSM Zelle mit DECT-Pikozellen bedeckt ist soll die Häufigkeit der Suchvorgänge einer maximalen, für ständige Erreichbarkeit technisch erforderlichen Suchrate entsprechen. Eine weitere Möglichkeit besteht darin, daß mobile Dualmode-Kommunikationsendgeräte im Laufe ihrer Lebensdauer den Bedekkungsgrad der einzelnen GSM-Zellen mit DECT-Pikozellen durch die Auswertung der Ergebnisse der Suchvorgänge selbst ermitteln und diesen Bedeckungsgrad der einzelnen GSM Zellen abspeichern. Dabei würde beispielsweise jede Zelle mit einer Identitätsnummer ID und jedes Kommunikationsnetz mit einer Kennummer K gekennzeichnet. Das Ergebnis der Suche nach bestimmten Kommunikationsnetzen in bestimmten Zellen wird dann der zugehörigen Identitätsnummer ID und Kennung K zugeordnet und in einer Speichervorrichtung festgehalten. Diese Speicherung kann dabei entweder in den einzelnen mobilen Kommunikationsehdgeräten selbst oder in Speichereinrichtungen des GSM-Netzes, z.B. in den Basisstationen erfolgen. Vor jedem erneuten Suchvorgang wird zuerst in diesem Speicher überprüft, wie erfolgversprechend eine Suche nach einem bestimmten Kommunikationsnetz in dieser Zelle erscheint und die Suchhäufigkeit dementsprechend angepaßt. Da es im Lauf der Zeit zu Änderungen in der Infrastruktur der DECT-Netze kommen kann, sollten diese Informationen über den Bedeckungsgrad in größeren Zeitabständen immer wieder neu ermittelt werden. Schließlich wäre es auch möglich, daß die Suche nach GSM-Netzen dann eingestellt wird, wenn ein DECT Netz verfügbar ist. Dies hätte wieder den Vorteil der Stromreduktion und darüber hinaus den Vorteil, daß zwangsweise das kostengünstigere Netz zur Kommunikation benützt wird. Es ist auch denkbar, daß die Informationen über die Verfügbarkeit der Kommunikationsnetze dem Multimode-Kommunikationsendgerät über entsprechende Tasten bzw. eine Menüsteuerung durch den Nutzer mitgeteilt werden.

Diese obenstehend beschriebenen Ausführungsbeispiele sind jedoch keineswegs auf GSM- oder DECT Netze beschränkt. Weitere erfindungsgemäße Ausführungsbeispiele basieren auf den gleichen Vorgehensweisen zur Beschaffung, Verarbeitung und Auswertung von Informationen über die Verfügbarkeit von Kommunikationsnetzen wie oben beschrieben. Allerdings gehen diese Ausführungsbeispiele der Erfindung von mehreren oder anderen prinzipiell verfügbaren Kommunikationsnetzen aus. So ist z.B. ein mobiles Multimode-Kommunikationsendgerät vorstellbar, das nicht nur über zwei verschiedene Kommunikationsnetze sondern über mehrere verschiedene Kommunikationsnetze erreichbar ist. Diese könnten sich darin unterscheiden, daß sie aus Zellen bestehen, die eine unterschiedliche durchschnittliche Zellenfläche aufweisen.

Eine weitere Ausgestaltung der Erfindung geht davon aus, daß die unterschiedlichen Kommunikationsnetze unterschiedliche Übertragungsverfahren und/oder Übertragungsstandards benützen, die unterschiedliche Hardware-Komponenten benötigen. Beispielsweise ist die Verwendung des erfindungsgemäßen Verfahrens in Zusammenhang mit Kommunikationsnetzen, die auf unterschiedlichen Mehrfachzugriffsverfahren, wie CDMA, TDMA, FDMA basieren vorstellbar. Eine Erreichbarkeit über verschiedene Kommunikationsnetze mit unterschiedlichen Mehrfachzugriffsverfahren setzt voraus, daß einige, den unterschiedlichen Mehrfachzugriffsverfahren entsprechenden Hardwarekomponenten in mehrfacher Ausführung vorhanden sein müssen. Dadurch, daß nur die Hardware-Komponenten mit Strom versorgt werden, die eine Erreichbarkeit in den momentan verfügbaren Kommunikationsnetzen gewährleisten kann der Stromverbrauch reduziert werden. Dies kann wieder dadurch erreicht werden, daß Informationen darüber, welche Kommunikationsnetze mit welchen Mehrfachzugriffsverfahren gerade verfügbar sind ausgewertet werden und zur Anpassung der Suchhäufigkeit verwendet werden. Diese Informationen können dabei von den verfügbaren Kommunikationsnetzen signalisiert werden oder in einem selbstlernenden Prozeß wie oben geschildert ermittelt werden.

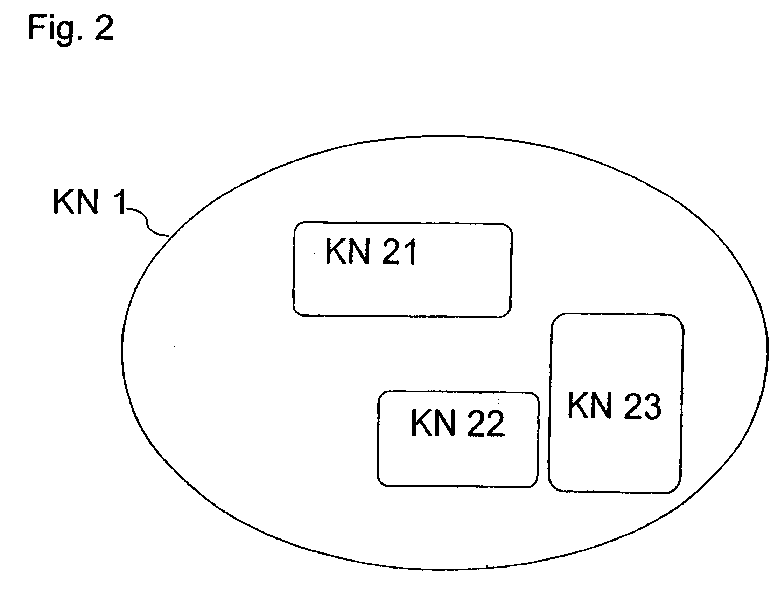

Darüber hinaus sind im Zusammenhang mit der Erfindung auch Kommunikationsnetze vorstellbar, deren Signalübertragung in unterschiedlichen Frequenzbereichen erfolgt. Eine erfindungsgemäße Ausgestaltung, die auf dieser Voraussetzung beruht sei anhand des folgenden speziellen Beispiels zweier Kommunikationsnetze (KN1, KN2), die unterschiedliche Frequenzbereiche (F1 und F2) benützen kurz ausgeführt. Wie in Figur 2 gezeigt, sind von diesen beiden Kommunikationsnetzen in einigen Bereichen (KN21, KN22, KN23) beide und in den übrigen Bereichen nur KN1 verfügbar. Wie oben erläutert muß ein mobiles Dualmode(Dualband)-Kommunikationsendgerät nun ständig nach evtl. vorhandenen Netzen suchen (scannen), um erreichbar zu sein. Um dies zu ermöglichen, müssen mehrere Hardware-Komponenten des Dualmode-Kommunikationsendgerätes entsprechend den Anforderungen der beiden unterschiedlichen Frequenzbereiche in unterschiedlicher und somit zweifacher Ausführung vorhanden sein und mit Strom versorgt werden. Um Strom zu sparen, sieht das erfindungsgemäße Verfahren nun vor, daß das Dualmode-Kommunikationsendgerät Informationen über die jeweilige momentane Verfügbarkeit der beiden Kommunikationsnetze benützt um die Häufigkeit der obengenannten Suchvorgänge zu variieren. Da der Stromverbrauch entscheidend von der Häufigkeit dieser Suchvorgänge abhängt, kann durch eine Reduzierung der Anzahl der Suchvorgänge auch der Stromverbrauch reduziert werden.

Eine Möglichkeit wäre dabei, daß das KN1 in jedem Bereich Informationen darüber signalisiert, wie gut dieser Bereich mit KN2 versorgt ist. Die Häufigkeit der Suchvorgänge wird dabei diesem Versorgungsgrad angepaßt. Der Versorgungsgrad kann dabei zwischen zwei Extremfällen schwanken: wenn der gesamte Bereich kein KN2 enthält, kann die Suche nach KN2 ganz unterbleiben, wenn hingegen der gesamte Bereich mit KN2 versorgt ist soll die Häufigkeit der Suchvorgänge einer maximalen, für ständige Erreichbarkeit technisch erforderlichen Suchrate entsprechen.

Eine weitere Möglichkeit wäre, daß mobile Dualmode-Kommunikationsendgeräte im Laufe ihrer Lebensdauer den Versorgungsgrad der einzelnen Bereiche durch die Auswertung der Ergebnisse der Suchvorgänge selbst ermitteln und diesen Versorgungsgrad der einzelnen Bereiche abspeichern. Es ist z.B. vorstellbar, daß jeder Bereich mit einer Identitätsnummer ID und jedes Kommunikationsnetz mit einer Kennummer K gekennzeichnet wird. Das Ergebnis der Suche nach bestimmten Kommunikationsnetzen in bestimmten Bereichen wird dann der zugehörigen Identitätsnummer ID und Kennung K zugeordnet und in einer Speichervorrichtung festgehalten. Diese Speicherung kann dabei entweder in den einzelnen mobilen Kommunikationsendgeräten selbst oder in Speichereinrichtungen des Kommunikationsnetze selbst erfolgen. Vor jedem erneuten Suchvorgang wird zuerst in diesem Speicher überprüft, wie erfolgversprechend eine Suche nach einem bestimmten Kommunikationsnetz in diesem Bereich ist und die Suchhäufigkeit dementsprechend angepaßt. Da es im Lauf der Zeit zu Änderungen in der Infrastruktur der Kommunikationsnetze kommen kann, sollten diese Informationen über den Bedeckungsgrad in größeren Zeitabständen immer wieder neu ermittelt werden.

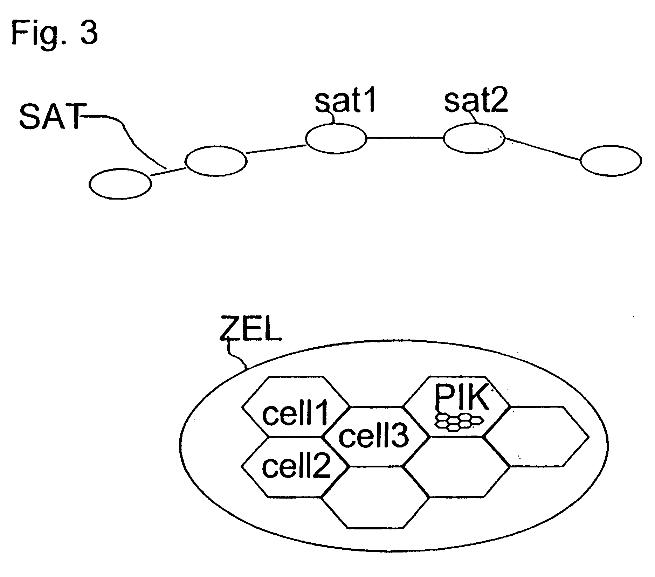

Figur 3 beschreibt drei verfügbare Kommunikationsnetze ein pikozellulares Netz (PIK), ein terrestrisches zellulares Mobilfunknetz (ZEL) mit Zellen (cell1, cell2, cell3) und ein Satellitenmobilfunknetz (SAT) mit Satelliten (sat1, sat2). Dabei kann es sich bei dem Satellitenmobilfunksystem um ein geostationäres- oder ein LEO/MEO-Satellitensystem handeln. Beispielsweise könnte das Satellitenmobilfunksystem (SAT) eine annähernd globale und das zellulare Mobilfunksystem (ZEL) eine regionale Versorgung ermöglichen, wohingegen das pikozellulare System (PIK) einzelne Stadtteile oder spezielle infrastrukturelle Einrichtungen wie Flughäfen oder Bahnhöfe versorgen sollte. Die Erreichbarkeit über die drei verschiedenen Kommunikationsnetze erfordert wiederum unterschiedliche Hardware-Komponenten. Dabei informiert das verfügbare Kommunikationsnetz (z.B. das Satellitenmobilfunksystem) das mobile Multimode-Kommunikationsendgerät über die örtliche Verfügbarkeit der anderen Kommunikationsnetze und veranlaßt somit eine Anpassung der Häufigkeit der Suchvorgänge nach diesen anderen Netzen in oben beschriebener Weise. Dies führt wiederum zu einer Reduktion des Stromverbrauchs, da wieder nur die Hardware-Komponenten mit Strom versorgt werden, die benötigt werden um über die momentan verfügbaren Kommunikationsnetze erreichbar zu sein.

Ein der Erfindung entsprechendes mobiles Kommunikationsendgerät (MKE) ist mit HF-Baugruppen und Basisbandbaugruppen versehen, die Kommunikation über mehrere unterschiedliche Kommunikationsnetze (KN2, KN3) ermöglichen. Dies bedeutet, daß mehrere dieser Hardware-Komponenten (KM1, KM2, KM3) eines Multimode-Kommunikationsendgerätes (MKE) entsprechend den Anforderungen der unterschiedlichen Kommunikationsnetze (KN2, KN3) in unterschiedlicher und somit mehrfacher Ausführung vorhanden sind. Desweiteren verfügt das Gerät über HF-Baugruppen und Basisbandbaugruppen zum Suchen nach momentan verfügbaren Kommunikationsnetzen (CM, SM, KM1, KM2, KM3). Diese Baugruppen zur Suche nach einem bestimmten Kommunikationsnetz (KN2, KN3) sind bereits in jedem handelsüblichen mobilen Endgerät enthalten. Ferner sieht die Erfindung Speicher und Prozessoren vor, die Informationen über die momentane Verfügbarkeit von Kommunikationsnetzen verarbeiten (EM) und Prozessoren zur intelligenten Steuerung der Häufigkeit der Suchvorgänge (AdM) nach verfügbaren Kommunikationsnetzen (KN2, KN3), mit dem Ziel, den Stromverbrauch zu reduzieren.

Eine Ausgestaltung des erfindungsgemäßen mobilen Multimode-Kommunikationsendgerätes sieht außerdem Baugruppen vor, die den Empfang von Informationen (IRM), über die Verfügbarkeit von Kommunikationsnetzen ermöglichen. Diese Informationen können z.B. von verfügbaren Kommunikationsnetzen signalisiert werden.

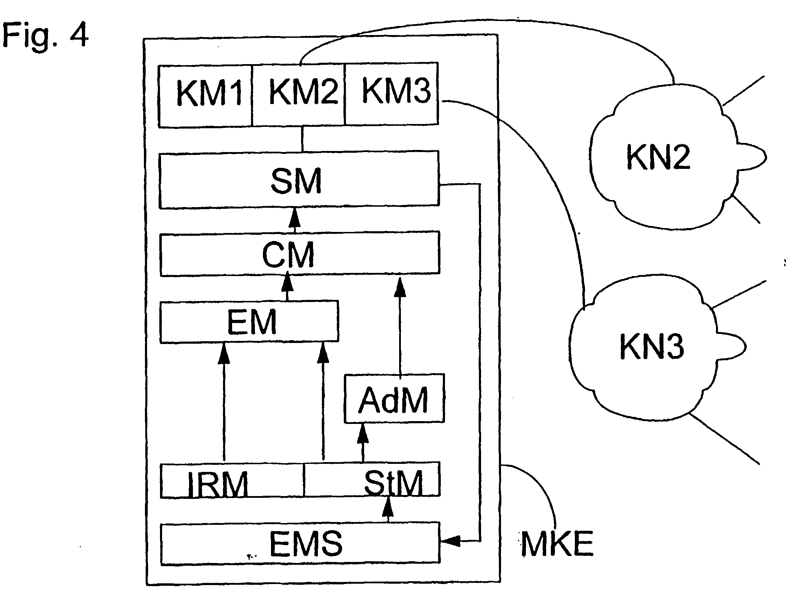

Figur 4 zeigt eine weitere Fortbildung des erfindungsgemäßen mobilen Multimode-Kommunikationsendgerätes, das außerdem einen Prozessor zur Auswertung von Suchvorgängen (EMS) und deren Ergebnissen und Speicher zur Speicherung dieser Ergebnisse (StM) enthält. Darüber hinaus ist ein Prozessor zur Anpassung der zeitlichen Abstände der Suchvorgänge (AdM) nach Kommunikationsnetzen (KN2, KN3) an diese Ergebnisse in Abhängigkeit vom örtlichen Bereich in dem sich das Kommunikationsendgerät (MKE) befindet vorgesehen. Dazu kann beispielsweise jede Zelle bzw. jeder Bereich mit einer Identitätsnummer ID und jedes Kommunikationsnetz mit einer Kennummer K gekennzeichnet werden. Das Ergebnis der Suche nach bestimmten Kommunikationsnetzen in bestimmten Zellen bzw. Bereichen wird dann der zugehörigen Identitätsnummer ID und Kennung K zugeordnet und in einer Speichervorrichtung festgehalten. Vor jedem erneuten Suchvorgang wird zuerst in diesem Speicher (StM) überprüft, wie erfolgversprechend eine Suche nach einem bestimmten Kommunikationsnetz K in dieser Zelle bzw. diesem Bereich ID ist und die Suchhäufigkeit dementsprechend angepaßt.

### Bezugszeichenliste

- MKE: mobiles Kommunikationsendgerät
- KM: Mittel zur Kommunikation mit mehreren Kommunikati onsnetzen
- KN: Kommunikationsnetz
- SM: Mittel zum Suchen nach Kommunikationsnetzen
- EM: Mittel zur Auswertung von Informationen über die Verfügbarkeit von Kommunikationsnetzen
- CM: Mittel zur Steuerung von SM
- IRM: Mittel zum Empfang von signalisierten Informationen über die Verfügbarkeit von Kommunikationsnetzen
- EMS: Mittel zur Auswertung von Suchvorgängen
- StM: Mittel zur Speicherung von Suchergebnissen
- AdM: Mittel zur Anpassung der zeitlichen Abstände der Suchvorgänge
- GSM: GSM Netz
- DECT: DECT Netz
- cell: Zelle eines zellularen Netzes
- SAT: Satellitenmobilfunknetz
- sat: Satellit
- ZEL: Zellulares Netz
- PIK: Pikozellulares Netz

## Patentansprüche

1. Verfahren zur Reduzierung des Stromverbrauchs von mobilen Multimode-Kommunikationsendgeräten, mit den Schritten:
- Erfassen von Informationen bezüglich des Bedeckungsgrads einer Mobilfunkzelle (cell1, cell2, cell3, KN1) eines Kommunikationsnetzes (GSM, SAT, KN1) durch ein oder mehrere andere Kommunikationsnetze (GSM, DECT, KN21, KN22, KN23); und
- Variieren der Häufigkeit des Suchens nach verfügbaren Kommunikationsnetzen (GSM, DECT, KN21, KN22, KN23) in Abhängigkeit von den Informationen bezüglich des Bedeckungsgrads der Mobilfunkzelle (celll, cell2, cell3, KN1).

2. Verfahren nach Anspruch 1,
**dadurch gekennzeichnet, daß**
Informationen über den Bedeckungsgrad anderer Kommunikationsnetze (GSM, DECT, KN21, KN22, KN23) von den verfügbaren Kommunikationsnetzen (GSM, SAT, KN1) signalisiert werden.

3. Verfahren nach Anspruch 1,
**dadurch gekennzeichnet, daß**
sich die Häufigkeit der Suchvorgänge in einem selbstlernenden Prozeß an den Bedeckungsgrad der Kommunikationsnetze (GSM, DECT, KN21, KN22, KN23) anpaßt.

4. Verfahren nach Anspruch 2,
**dadurch gekennzeichnet, daß**
das Kommunikationsendgerät (MKE) in zeitlichen Abständen nach verfügbaren Kommunikationsnetzen (GSM, DECT, SAT, KN1, KN21, KN22, KN23) sucht, wobei die Suche nach einem oder mehrerer dieser Kommunikationsnetze (GSM, DECT, KN21, KN22, KN23) eingestellt wird, wenn sich das Kommunikationsendgerät (MKE) in Bereichen (cell1, cell2, cell3, KN1) befindet, in denen ein verfügbares Kommunikationsnetz (GSM, SAT, KN1) signalisiert, daß die Suche nach einem oder mehreren dieser Kommunikationsnetze (GSM, DECT, KN21, KN22, KN23) eingestellt werden soll.

5. Verfahren nach Anspruch 3,
**dadurch gekennzeichnet, daß**
das Kommunikationsendgerät (MKE) in zeitlichen Abständen nach verfügbaren Kommunikationsnetzen (GSM, DECT, SAT, KN1, KN21, KN22, KN23) sucht, wobei Bereiche (celll, cell2, cell3, KN1), in denen die Suche nach einem oder mehreren dieser Kommunikationsnetze (GSM, DECT, KN21, KN22, KN23) erfolglos ist, markiert werden, und diese Markierung dazu verwendet wird, eine weitere oder erneute Suche nach einem oder mehreren dieser Kommunikationsnetze (GSM, DECT, SAT, KN1, KN21, KN22, KN23) in diesen Bereichen (celll, cell2, cell3, KN1) wenigstens bis zum Ablauf einer bestimmten Zeitspanne einzustellen oder einzuschränken.

6. Verfahren nach einem der vorhergehenden Ansprüche,
**dadurch gekennzeichnet, daß**
die verschiedenen Kommunikationsnetze (GSM, DECT, SAT, KN1, KN21, KN22, KN23) auf unterschiedlichen Übertragungsverfahren und/oder Übertragungsstandards basieren.

7. Verfahren nach einem der vorhergehenden Ansprüche,
**dadurch gekennzeichnet, daß**
die verschiedenen Kommunikationsnetze (GSM, DECT, SAT, KN1, KN21, KN22, KN23) aus unterschiedlich großen Zellen (celll, cell2, cell3, PIK, KN1, KN21, KN22, KN23) aufgebaut sind und die Netze (GSM, SAT, KN1), die aus größeren Zellen (celll, cell2, cell3, KN1) bestehen, Informationen darüber signalisieren, welche aus kleineren Zellen (PIK) bestehende Netze (DECT, KN21, KN22, KN23) innerhalb einer solchen großen Zelle verfügbar sind.

8. Verfahren nach einem der vorhergehenden Ansprüche,
**dadurch gekennzeichnet, daß**
die verschiedenen Kommunikationsnetze (GSM, DECT, SAT, KN1, KN21, KN22, KN23) zellulare Netze, z.B. nach dem GSM-Standard, und pikozellulare Netze, z.B. nach dem DECT-Standard, sind.

9. Verfahren nach einem der vorhergehenden Ansprüche,
**dadurch gekennzeichnet, daß**
die verschiedenen Kommunikationsnetze (GSM, DECT, SAT, KN1, KN21, KN22, KN23) mit unterschiedlichen Mehrfachzugriffsverfahren, z.B. TDMA, FDMA, CDMA, betrieben werden.

10. Verfahren nach einem der vorhergehenden Ansprüche,
**dadurch gekennzeichnet, daß**
die verschiedenen Kommunikationsnetze (GSM, DECT, SAT, KN1, KN21, KN22, KN23) unterschiedliche Frequenzbereiche benützen.

11. Verfahren nach einem der vorhergehenden Ansprüche,
**dadurch gekennzeichnet, daß**
die verschiedenen Kommunikationsnetze (GSM, DECT, SAT, KN1, KN21, KN22, KN23) terrestrische Mobilfunknetze (GSM, DECT) und Satellitenmobilfunknetze (SAT) sind.

12. Mobiles Kommunikationsendgerät (MKE) mit
a) Mitteln (KM) zur Kommunikation mit mehreren Kommunikationsnetzen (GSM, DECT, SAT, KN1, KN21, KN22, KN23)
b) Mitteln (SM) zum Suchen nach verfügbaren Kommunikationsnetzen (GSM, DECT, SAT, KN1, KN21, KN22, KN23)
c) Mitteln (EM) zur Auswertung von Informationen über den Bedeckungsgrad einer Mobilfunkzelle (cell1, cell2, cell3, KN1) eines Kommunikationsnetzes (GSM, DECT, SAT, KN1, KN21, KN22, KN23) durch ein oder mehrere andere Kommunikationsnetze (GSM, DECT, KN21, KN22, KN23), und
d) Mitteln (CM) zur Steuerung der Mittel zum Suchen (SM) nach verfügbaren Kommunikationsnetzen (GSM, DECT, SAT, KN1, KN21, KN22, KN23) in Abhängigkeit von der Auswertung von Informationen über den Bedeckungsgrad mit dem Ziel einer Reduktion des Stromverbrauchs des Kommunikationsendgerätes (MKE).

13. Kommunikationsendgerät (MKE) nach Anspruch 12, mit Mitteln zum Empfang (IRM) von durch ein Kommunikationsnetz (GSM, SAT, KN1) signalisierten Informationen über den Bedeckungsgrad von Kommunikationsnetzen (GSM, DECT, KN21, KN22, KN23).

14. Kommunikationsendgerät (MKE) nach Anspruch 12 oder 13, mit
a) Mitteln (EMS) zur Auswertung von Suchvorgängen nach Kommunikationsnetzen (GSM, DECT, SAT, KN1, KN21, KN22, KN23) und deren Ergebnissen
b) Mitteln (SM) zur Speicherung dieser Ergebnisse und
c) Mitteln (AdM) zur Anpassung der zeitlichen Abstände der Suchvorgänge nach Kommunikationsnetzen (GSM, DECT, SAT, KN1, KN21, KN22, KN23) an diese Ergebnisse in Abhängigkeit vom örtlichen Bereich (cell1, cell2, cell3, KN1) in dem sich das Kommunikationsendgerät (MKE) befindet.

## Claims

1. Method for reducing the power consumption of mobile multimode communication terminals, having the steps of:
- detection of information relating to the level of coverage of a mobile radio cell (cell1, cell2, cell3, KN1) in a communication network (GSM, SAT, KN1) via one or more other communication networks (GSM, DECT, KN21, KN22, KN23);
- variation of the frequency of the search for available communication networks (GSM, DECT, KN21, KN22, KN23) as a function of information relating to the level of coverage of the mobile radio cell (cell1, cell2, cell3, KN1).

2. Method according to Claim 1, **characterized in that** information about the level of coverage of other communication networks (GSM, DECT, KN21, KN22, KN23) is signalled by the available communication networks (GSM, SAT, KN1).

3. Method according to Claim 1, **characterized in that** the frequency of the search processes in a self-learning process is matched to the level of coverage of the communication networks (GSM, DECT, KN21, KN22, KN23).

4. Method according to Claim 2, **characterized in that** the communication terminal (MKE) searches for available communication networks (GSM, DECT, SAT, KN1, KN21, KN22, KN23) at time intervals, in which case the search for one or more of these communications networks (GSM, DECT, KN21, KN22, KN23) is stopped if the communication terminal (MKE) finds, in areas (cell1, cell2, cell3, KN1) in which an available communication network (GSM, SAT, KN1) is signalling, that the search for one or more of these communication networks (GSM, DECT, KN21, KN22, KN23) should be stopped.

5. Method according to Claim 3, **characterized in that** the communication terminal (MKE) searches for available communication networks (GSM, DECT, SAT, KN1, KN21, KN22, KN23) at time intervals, in which case areas (cell1, cell2, cell3, KN1) in which the search for one or more of these communication networks (GSM, DECT, KN21, KN22, KN23) is unsuccessful are marked, and this marking is used to stop or to limit a further or renewed search for one or more of these communication networks (GSM, DECT, SAT, KN1, KN21, KN22, KN23) in these areas (cell1, cell2, cell3, KN1), at least until a specific time period has passed.

6. Method according to one of the preceding claims, **characterized in that** the various communication networks (GSM, DECT, SAT, KN1, KN21, KN22, KN23) are based on different transmission methods and/or transmission standards.

7. Method according to one of the preceding claims, **characterized in that** the various communication networks (GSM, DECT, SAT, KN1, KN21, KN22, KN23) are formed from cells (cell1, cell2, cell3, PIK, KN1, KN21, KN22, KN23) of different sizes, and the networks (GSM, SAT, KN1) which comprise relatively large cells (cell1, cell2, cell3, KN1) signal information about which networks (DECT, KN21, KN22, KN23) that comprise relatively small cells (PIK) are available within such a large cell.

8. Method according to one of the preceding claims, **characterized in that** the various communication networks (GSM, DECT, SAT, KN1, KN21, KN22, KN23) are cellular networks, for example in accordance with GSM Standard, and picocellular networks, for example in accordance with the DECT Standard.

9. Method according to one of the preceding claims, **characterized in that** the various communication networks (GSM, DECT, SAT, KN1, KN21, KN22, KN23) are operated using different multiple access methods, for example TDMA, FDMA, CDMA.

10. Method according to one of the preceding claims, **characterized in that** the various communication networks (GSM, DECT, SAT, KN1, KN21, KN22, KN23) use different frequency bands.

11. Method according to one of the preceding claims, **characterized in that** the various communication networks (GSM, DECT, SAT, KN1, KN21, KN22, KN23) are terrestrial mobile radio networks (GSM, DECT) and satellite mobile radio networks (SAT).

12. Mobile communication terminal (MKE) having
a) means (KM) for communication with a plurality of communication networks (GSM, DECT, SAT, KN1, KN21, KN22, KN23),
b) means (SM) for searching for available communication networks (GSM, DECT, SAT, KN1, KN21, KN22, KN23),
c) means (EM) for evaluation of information about the level of coverage of a mobile radio cell (cell1, cell2, cell3, KN1) in a communication network (GSM, DECT, SAT, KN1, KN21, KN22, KN23) by one or more other communication networks (GSM, DECT, KN21, KN22, KN23), and
d) means (CM) for controlling the means for searching (SM) for available communication networks (GSM, DECT, SAT, KN1, KN21, KN22, KN23), as a function of the evaluation of information about the level of coverage, with the aim of a reduction in the power consumption of the communication terminal (MKE).

13. Communication terminal (MKE) according to Claim 12 having means for reception (IRM) of information, which is signalled by a communication network (GSM, SAT, KN1), about the level of coverage of communication networks (GSM, DECT, KN21, KN22, KN23).

14. Communication terminal (MKE) according to Claim 12 or 13, having
a) means (EMS) for evaluation of search processes for communication networks (GSM, DECT, SAT, KN1, KN21, KN22, KN23) and their results
b) means (SM) for storing these results, and
c) means (AdM) for matching the time intervals between the search processes for communication networks (GSM, DECT, SAT, KN1, KN21, KN22, KN23) to these results, as a function of the local area (cell1, cell2, cell3, KN1) in which the communication terminal (MKE) is located.

## Revendications

1. Procédé de réduction de la consommation de courant de terminaux mobiles de communication multimodale, lequel procédé comprend les étapes consistant à :
- détecter des informations relatives à la couverture d'une cellule de téléphonie mobile (cell1, cell2, cell3, KN1) d'un réseau de communication (GSM, SAT, KN1) par un ou plusieurs autres réseaux de communication (GSM, DECT, KN21, KN22, KN23); et
- faire varier la fréquence de recherche des réseaux de communication disponibles (GSM, DECT, KN21, KN22, KN23) en fonction des informations relatives à la couverture de la cellule téléphonique mobile (cell1, cell2, cell3, KN1).

2. Procédé selon la revendication 1, **caractérisé en ce que** des informations relatives à la couverture d'autres réseaux de communication (GSM, DECT, KN21, KN22, KN23) sont signalées par les autres réseaux de communication disponibles (GSM, SAT, KN1).

3. Procédé selon la revendication 1, **caractérisé en ce que** la fréquence des processus de recherche dans un processus autoadaptatif s'adapte à la couverture des réseaux de communication (GSM, DECT, KN21, KN22, KN23).

4. Procédé sur la revendication 2, **caractérisé en ce que** le terminal de communication (MKE) recherche à des intervalles de temps les réseaux de communication disponibles(GSM, DECT, KN21, KN22, KN23), la recherche d'un ou plusieurs de ces réseaux de communication (GSM, DECT, KN21, KN22, KN23) étant arrêtée lorsque le terminal de communication se trouve dans des zones (cell1, cell2, cell3, KN1) dans lesquelles un réseau de communication disponible (GSM, SAT, KN1) signale que la recherche d'un ou plusieurs de ces réseaux de communication peut être arrêtée.

5. Procédé selon la revendication 3, **caractérisé en ce que** le terminal de communication (MKE) recherche à des intervalles de temps des réseaux de communication disponibles (GSM, DECT, KN21, KN22, KN23), les zones (cell1, cell2, cell3, KN1) dans lesquelles la recherche d'un ou plusieurs de ces réseaux de communication est infructueuse étant repérées et ce repérage étant utilisé pour arrêter ou limiter une autre recherche ou une nouvelle recherche d'un ou plusieurs de ces réseaux de communication (GSM, DECT, KN21, KN22, KN23) dans ces zones (cell1, cell2, cell3, KN1) au moins jusqu'à ce qu'un intervalle de temps déterminé se soit écoulé.

6. Procédé selon l'une des revendications précédentes, **caractérisé en ce que** les divers réseaux de communication (GSM, DECT, KN21, KN22, KN23) sont fondés sur divers procédés de transmission, et/ou diverses normes de transmission.

7. Procédé selon l'une des revendications précédentes, **caractérisé en ce que** les divers réseaux de communication (GSM, DECT, SAT, KN21, KN22, KN23) sont constitués de cellules de différentes dimensions (cell1, cell2, cell3, PIK, KN1, KN21, KN22, KN23) et les réseaux (GSM, SAT, KN1) qui sont constitués de cellules plus grandes(cell1, cell2, cell3, KN1), signalent des informations selon lesquelles des réseaux (DECT, KN21, KN22, KN23) constitués de cellules plus petites (PIK) sont disponibles à l'intérieur d'une telle grande cellule.

8. Procédé selon l'une des revendications précédentes, **caractérisé en ce que** les divers réseaux de communication (GSM, DECT, SAT, KN1, KN21, KN22, KN23) sont des réseaux cellulaires, par exemple selon la norme GSM, et des cellules picocellulaires, par exemple selon la norme DECT.

9. Procédé selon l'une des revendications précédentes, **caractérisée en ce que** les divers réseaux de communication (GSM, DECT, SAT, KN1, KN21, KN22, KN23) sont exploités avec divers procédés d'accès multiple, par exemple TDMA, FDMA, CDMA.

10. Procédé selon l'une des revendications précédentes, **caractérisé en ce que** les divers réseaux de communication (GSM, DECT, SAT, KN1, KN21, KN22, KN23) utilisent différentes gammes de fréquence.

11. Procédé selon l'une des revendications précédentes, **caractérisé en ce que** les divers réseaux de communication (GSM, DECT, SAT, KN1, KN21, KN22, KN23) sont des réseaux de téléphonie mobile terrestre (GSM, DECT) et des réseaux de téléphonie mobile par satellite (SAT).

12. Terminal de communications mobile (MKE) comportant
a) des moyens (KM) de communication avec plusieurs réseaux de communication (GSM, DECT, SAT, KN1, KN21, KN22, KN23),
b) des moyens (SM) de recherche de réseaux de communication disponibles (GSM, DECT, SAT, KN1, KN21, KN22, KN23),
c) des moyens (EM) d'exploitation d'informations sur la couverture des cellules de téléphonie mobiles (cell1, cell2, cell3, KN1) d'un réseau de communication (GSM, DECT, SAT, KN1, KN21, KN22, KN23) par un ou plusieurs autres réseaux de communication (GSM, DECT, KN21, KN22, KN23), et
d) des moyens (CM) de commande des moyens (SM) de recherche de réseaux de communication disponibles (GSM, DECT, SAT, KN1, KN21, KN22, KN23) en fonction de l'exploitation d'informations sur la couverture dans le but de réduire la consommation de courant du terminal de communication (MKE).

13. Terminal de communication (MKE) selon la revendication 12, comportant des moyens (IRM) de réception d'informations signalées par un réseau de communication (GSM, DECT, KN21, KN22, KN23) et relatives à la couverture de réseaux de communication (GSM, DECT, SAT, KN1).

14. Terminal de communication (MKE) selon la revendication 12 ou 13, comportant
a) des moyens (EMS) d'exploitation de processus de recherche de réseaux de communication (GSM, DECT, SAT, KN1, KN21, KN22, KN23) et de leurs résultats
b) des moyens (SM) de mémorisation de ces résultats et
c) des moyens (AdM) d'adaptation des intervalles de temps des processus de recherche de réseaux de communication (GSM, DECT, SAT, KN1, KN21, KN22, KN23) à ces résultats en fonction de la zone locale (cell1, cell2, cell3, KN1) dans laquelle se trouve le terminal de communication (MKE).
